# EUROPÄISCHE PATENTSCHRIFT

(11) **EP 3 074 258 B1**
(45) Veröffentlichungstag und Bekanntmachung des Hinweises auf die Patenterteilung: **05.07.2017**
(21) Anmeldenummer: 14799105.3
(22) Anmeldetag: 11.11.2014
(51) Int. Cl.: B60K 6/52, B60K 23/08, B60W 20/00

(54) **VORRICHTUNGEN UND VERFAHREN ZUM VERTEILEN EINER GESAMTSOLLMOMENT-VORGABE**
DEVICES AND METHOD FOR DISTRIBUTING A TOTAL TARGET TORQUE SPECIFICATION
DISPOSITIFS ET PROCÉDÉ PERMETTANT DE DISTRIBUER UNE PRESCRIPTION DE COUPLE THÉORIQUE GLOBAL

(30) Priorität: 28.11.2013 DE 102013019902
(43) Veröffentlichungstag der Anmeldung: 05.10.2016
(73) Patentinhaber: Audi AG, 85045 Ingolstadt (DE)
(72) Erfinder: WEIN, Michael, 92358 Seubersdorf (DE); BUROW, Clemens, 80339 München (DE); BEYER, Stefan, 85139 Wettstetten (DE)
(86) Internationale Anmeldenummer: PCT/EP2014/003018
(87) Internationale Veröffentlichungsnummer: WO 2015/078557

(56) Entgegenhaltungen:
- DE-A1-102008 043 853
- DE-A1-102010 015 423
- US-A1- 2005 060 079

## Beschreibung

Die vorliegende Erfindung betrifft ein Hybridmanager-Steuergerät für einen Antriebsstrang eines Fahrzeugs. Das Hybridmanager-Steuergerät weist eine Gesamtsollmoment-Aufteilvorrichtung zum Optimieren eines Wirkungsgrads mittels Aufteilens einer Gesamtsollmoment-Vorgabe in eine erste Achsmoment-Vorgabe für eine erste Achse des Fahrzeugs und in eine zweite Achsmoment-Vorgabe für eine zweite Achse des Fahrzeugs auf. Das Hybridmanager-Steuergerät weist eine Umverteilungsvorrichtung zum Erzeugen einer ersten und einer zweiten umverteilten Achsmoment-Vorgabe mittels teilweisen oder vollständigen Umverteilens der ersten oder der zweiten Achsmoment-Vorgabe auf die zweite umverteilte Achsmoment-Vorgabe oder auf die erste umverteilte Achsmoment-Vorgabe auf. Hierbei wird mindestens ein fahrdynamischer Parameter berücksichtigt.

Mit der ersten Achse können ein oder mehrere Motoren und/oder Generatoren verbunden sein. Beispielsweise kann mit der ersten Achse nur eine elektrische Maschine verbunden sein, die entweder als Motor oder als Generator oder wahlweise als Motor und als Generator betreibbar ist. Alternativ kann mit der ersten Achse nur eine Verbrennungsmaschine verbunden sein, die nur als Motor (Antriebsmaschine) betreibbar ist. Eine weitere Alternative sieht vor, dass mit der ersten Achse mehrere elektrische Maschinen verbunden sind, die jeweils wahlweise als Motor oder als Generator betreibbar sind. Alternativ oder zusätzlich können mit der ersten Achse mehrere Verbrennungsmaschinen verbunden sein, die als Motor betreibbar sind. Jede der entsprechenden Antriebs- und/oder Energierückgewinnungsvarianten für die zweite Achse kann mit jeder der erwähnten Antriebs- und/oder Energierückgewinnungsvarianten der ersten Achse kombiniert werden. Sofern keine weitere Achse zum Antrieb des Fahrzeugs vorhanden ist, ist mit der ersten oder mit der zweiten Achse typischerweise mindestens eine Antriebsmaschine verbunden.

Darüberhinaus ist es auch möglich, bei Bedarf ein oder mehrere Verbrennungsmaschinen an der ersten und/oder an der zweiten Achse zum Bremsen einzusetzen. Ein Betrieb, in dem die elektrische Energie, die von einer elektrischen Maschine erzeugt wird, in der elektrischen Maschine selbst in Wärme umgewandelt wird (beispielsweise in einem Kurzschlussbetrieb zum Bremsen), wird hier als Energierückgewinnungsvariante angesehen (allerdings nicht für Effizienzbetrachtungen). In einer bevorzugten Ausführungsform ist an der ersten Achse eine Verbrennungsmaschine kombiniert mit mindestens einer elektrischen Maschine vorgesehen und an der zweiten Achse mindestens eine elektrische Maschine (vorzugsweise ohne eine Verbrennungsmaschine) vorgesehen. Verbrennungsmaschinen im Sinne der vorliegenden Erfindung können auch als Verbrennungskraftmaschinen oder Verbrennungsmotoren bezeichnet werden.

Außerdem betrifft die Erfindung eine Fahrzeugsteuerung, die ein solches Hybridmanager-Steuergerät und ein Fahrwerksteuergerät zur Bereitstellung einer Momentverteilungs-Sollvorgabe und/oder zur Bereitstellung einer Vorgabe für ein maximales Achsmoment der ersten Achse und/oder zur Bereitstellung einer Vorgabe für ein maximales Achsmoment der zweiten Achse umfasst.

Darüber hinaus betrifft die Erfindung ein Fahrzeug, das ein solches Hybridmanager-Steuergerät oder eine solche Fahrzeugsteuerung umfasst.

Des Weiteren betrifft die Erfindung auch ein Verfahren zum Verteilen einer Gesamtsollmoment-Vorgabe für ein Fahrzeug.

Die US 2005/0060079 A1 beschreibt einen Vermittler auf Radebene (wheel level arbiter), der Vorgaben für erwünschte Radkräfte erzeugt. Die Vorgabe für die erwünschte Radkraft wird durch eine geschwindigkeitsabhängige Radkraftbegrenzung (vehicle speed wheel force limit) begrenzt.

Die DE 10 2008 043 853 A1 beschreibt einen Antriebsstrang mit einem Allradverteiler, der eine automatisiert betätigbare Kupplung aufweist. Die automatisiert betätigbare Kupplung teilt ein Getriebeausgangsmoment des Getriebes im Sinne einer variablen Momentverteilung auf angetriebene Achsen des Abtriebs des Antriebsstrangs auf. Das Getriebeausgangsmoment abzüglich eines von einer Allrad-Fahrstrategie vorgegebenen Sollmoments wird auf eine Hauptantriebsachse und das Sollmoment auf eine Nebenachse übertragen.

Die DE 10 2010 015 423 A1 beschreibt eine Steuereinrichtung für ein allradgetriebenes Fahrzeug. Der Steuereinrichtung ist eine Momentenverteilungseinheit zugeordnet, mit der ein Antriebsmoment auf einen Vorderradantrieb und einen Hinterradantrieb verteilbar ist. Die Steuervorrichtung legt einen Effizienzmodus fest. Wenn jedoch querdynamische Einflüsse vorliegen, kann die elektronische Steuereinrichtung die Antriebsvorrichtung mit einem Allradantriebsmodus ansteuern.

Die bekannte Steuereinrichtung hat den Nachteil, dass die Allradregelung einen begrenzenden Einfluss auf eine Vorsteuerung der Antriebsmomente (und ggf. Bremsmomente) hat und sich somit auf die Fahrzeuglängsbeschleunigung auswirkt.

Es ist eine Aufgabe der vorliegenden Erfindung, eine Fahrzeugsteuerung für eine Momentenverteilung bereitzustellen, in der ein Einfluss der Momentenverteilung auf die Fahrzeuglängsbeschleunigung vermieden oder zumindest verringert wird. Außerdem ist es eine Aufgabe der Erfindung, ein dafür geeignetes Hybridmanager-Steuergerät und ein entsprechendes Verfahren zum Verteilen einer Gesamtsollmoment-Vorgabe zu definieren. Darüber ist es eine Aufgabe der Erfindung, ein Fahrzeug mit diesem Vorteil bereitzustellen.

Diese Aufgabe wird erfindungsgemäß durch ein Hybridmanager-Steuergerät für ein Fahrzeug gemäß Patentanspruch 1, eine Fahrzeugsteuerung gemäß Patentanspruch 6, ein Fahrzeug gemäß Anspruch 7 und ein Verfahren gemäß Anspruch 8_gelöst. Vorteilhafte Weiterbildungen der vorliegenden Erfindungen sind in den Unteransprüchen angegeben.

Entsprechend der vorliegenden Erfindung wird ein Hybridmanager-Steuergerät für einen Antriebsstrang eines Fahrzeugs bereitgestellt. Das Hybridmanager-Steuergerät weist eine Gesamtsollmoment-Aufteilvorrichtung zum Optimieren eines Wirkungsgrads mittels Aufteilens einer Gesamtsollmoment-Vorgabe in eine erste Achsmoment-Vorgabe für eine erste Achse des Fahrzeugs und in eine zweite Achsmoment-Vorgabe für eine zweite Achse des Fahrzeugs auf. Das Hybridmanager-Steuergerät weist eine Umverteilungsvorrichtung zum Erzeugen einer ersten und einer zweiten umverteilten Achsmoment-Vorgabe mittels teilweisen oder vollständigen Umverteilens der ersten oder der zweiten Achsmoment-Vorgabe auf die zweite umverteilte Achsmoment-Vorgabe oder auf die erste umverteilte Achsmoment-Vorgabe unter Berücksichtigung von mindestens einem fahrdynamischen Parameter auf. Das Hybridmanager-Steuergerät weist einen ersten Achsmomentbegrenzer zum Begrenzen der ersten umverteilten Achsmoment-Vorgabe nach dem Erzeugen der ersten umverteilten Achsmoment-Vorgabe auf. Alternativ oder zusätzlich weist das Hybridmanager-Steuergerät einen zweiten Achsmomentbegrenzer zum Begrenzen der zweiten umverteilten Achsmoment-Vorgabe nach dem Erzeugen der zweiten umverteilten Achsmoment-Vorgabe auf.

Dementsprechend umfasst eine erfindungsgemäße Fahrzeugsteuerung ein erfindungsgemäßes Hybridmanager-Steuergerät und ein Fahrwerksteuergerät zur Bereitstellung einer Momentverteilungs-Sollvorgabe und/oder zur Bereitstellung einer Vorgabe für ein maximales Achsmoment der ersten Achse und/oder zur Bereitstellung einer Vorgabe für ein maximales Achsmoment der zweiten Achse. Ein erfindungsgemäßes Fahrzeug umfasst ein erfindungsgemäßes Hybridmanager-Steuergerät oder eine erfindungsgemäße Fahrzeugsteuerung.

Ein entsprechendes Verfahren zum Verteilen einer Gesamtsollmoment-Vorgabe für ein Fahrzeug umfasst folgende Schritte. In einem ersten Schritt des Verfahrens wird ein Wirkungsgrad mittels Aufteilens einer Gesamtsollmoment-Vorgabe in eine erste Achsmoment-Vorgabe für eine erste Achse des Fahrzeugs und in eine zweite Achsmoment-Vorgabe für eine zweite Achse des Fahrzeugs optimiert. In einem zweiten Schritt des Verfahrens wird eine erste und eine zweite umverteilte Achsmoment-Vorgabe mittels teilweisen oder vollständigen Umverteilens der ersten oder der zweiten Achsmoment-Vorgabe auf die andere der beiden Achsmoment-Vorgaben unter Berücksichtigung von mindestens einem fahrdynamischen Parameter erzeugt. Das Verfahren umfasst nach dem Schritt des Erzeugens einer ersten und einer zweiten umverteilten Achsmoment-Vorgabe auch mindestens einen der beiden folgenden Schritte: Begrenzen der ersten umverteilten Achsmoment-Vorgabe; Begrenzen der zweiten umverteilten Achsmoment-Vorgabe. Hierdurch kann eine Überlastung der ersten und/oder der zweiten Achse vermieden werden.

Ein Konzept der vorliegenden Erfindung kann darin gesehen werden, dass in fahrdynamisch kritischen Betriebszuständen des Fahrzeugs Fahrdynamikfunktionen Priorität eingeräumt wird, während in fahrdynamisch unkritischen Betriebszuständen einer Wirkungsgradoptimierung Priorität eingeräumt wird. Ein weiteres Konzept der Erfindung besteht darin, dass Funktionen zum Verteilen von Momenten klar von Funktionen zur Begrenzung (Limitierung) von Momenten getrennt werden. Bei der Auslegung von verteilenden Reglern und Steuerungen muss keine Rücksicht auf eine eventuell nicht gewollte Antriebsmomentenverringerung genommen werden. Vorsteuernde Regleranteile können so ausgeführt werden, dass diese nie begrenzen. Begrenzungen können einer Teilmenge der geregelten Funktionen vorbehalten bleiben. Aufgrund prozentualer Wertangabe kann das Umverteilen von Sollmoment-Vorgaben bereits bei kleinen Momenten erfolgen. Je nach Anwendungssituation kann die Umverteilung auch nur als eine konstant bleibende Antriebsmomentenverteilung eingestellt werden. Vorsteuerungen wirken hier direkt ohne Zeitverzug durch den Austausch von effizienten und fahrdynamischen Sollmomenten.

Bei Bedarf können die Achsmomente vom Allradregler individuell verringert werden. Damit kann auch dann noch ein gewünschtes Fahrverhalten eingestellt werden, wenn aus Gründen einer Leistungsbeschränktheit einer Antriebsachse kein weiteres Verteilen von Antriebsmomenten mehr möglich ist. Beispiel: Die Allrad-Fahrdynamik-Software verteilt die Gesamtsollmoment-Vorgabe bei Kurvenfahrt zur zweiten Achse (beispielsweise Hinterachse), um das Fahrverhalten zu verbessern. Wenn aber die zweite Achse nicht so leistungsfähig ist, dass sie das angeforderte Moment bereitstellen kann, kann es vorteilhafter sein, eine Verlangsamung des Fahrzeugs zu vermeiden, indem eine Moment-Vorgabe oder ein Anteil der Moment-Vorgabe einer Achse (beispielsweise der Vorderachse) doch nicht zur anderen Achse (beispielsweise Hinterachse) umverteilt wird.

Solange keine fahrdynamischen Gründe für eine Verschiebung von Antriebsmoment zwischen beiden Antriebsachsen bestehen, kann die effizienteste (wirkungsgradoptimierte) Antriebsmomentenverteilung beibehalten bleiben. Dennoch kann eine klare Trennung von Antriebsregelung (Effizienz) und Fahrdynamikregelung (Fahrsicherheit) erhalten bleiben. Verändert sich das Sollmoment, kann die Verteilung ohne Zeitverzug beibehalten bleiben, da deren prozentualer Wert bereits vorliegt und die Moment-Vorgaben nicht über das Fahrwerksteuergerät geleitet werden müssen. Soll das Moment einer Achse beschränkt werden, erfolgt dies über definierte Achsmoment-Begrenzungsschnittstellen am Ende des Momentenpfads im Hybridmanager-Steuergerät. Die Fahrzeuglängsbeschleunigung kann in der Regel erhalten bleiben, wenn beide Achsen zusammen das angeforderte Gesamtsollmoment übertragen können. Damit wird die eingangs definierte Aufgabe der vorliegenden Erfindung erfüllt, dass ein Einfluss der Momentenverteilung auf die Fahrzeuglängsbeschleunigung vermieden oder zumindest verringert wird.

Das Hybridmanager-Steuergerät weist einen ersten Achsmomentbegrenzer zum Begrenzen der ersten umverteilten Achsmoment-Vorgabe auf. Alternativ oder zusätzlich kann das Hybridmanager-Steuergerät einen zweiten Achsmomentbegrenzer zum Begrenzen der zweiten umverteilten Achsmoment-Vorgabe aufweisen. Hierdurch kann eine Überlastung der ersten und/oder der zweiten Achse vermieden werden.

Es ist von Vorteil, wenn das Hybridmanager-Steuergerät eine Vorrichtung zum Ausgleichen einer Verringerung der ersten umverteilten Achsmoment-Vorgabe aufweist, die durch das Begrenzen der ersten umverteilten Achsmoment-Vorgabe stattfindet. Alternativ oder zusätzlich kann es auch von Vorteil sein, wenn das Hybridmanager-Steuergerät eine Vorrichtung zum Ausgleichen einer Verringerung der zweiten umverteilten Achsmoment-Vorgabe aufweist, die durch das Begrenzen der zweiten umverteilten Achsmoment-Vorgabe stattfindet. Hierdurch kann, wenn die Achsmomentbegrenzung nur eines der beiden Achsmomentbegrenzer greift, in vielen Fällen eine Gesamtsollmoment-Vorgabe trotz der Begrenzung noch erfüllt werden.

Auch kann es zweckmäßig sein, wenn das Hybridmanager-Steuergerät eine Gesamtsollmoment-Vorgabe-Ermittlungsvorrichtung zum Ermitteln einer Gesamtsollmoment-Vorgabe aufweist. Die Aufnahme der Ermittlungsfunktion für die Gesamtsollmoment-Vorgabe in das erfindungsgemäße Steuergerät kann eine Verlässlichkeit der Fahrzeugsteuerung erhöhen.

Eine Ausführungsform sieht vor, dass die Gesamtsollmoment-Vorgabe-Ermittlungsvorrichtung dazu vorbereitet ist, die Gesamtsollmoment-Vorgabe unter Berücksichtigung einer Fahrpedalbetätigung zu erzeugen. Mit diesem Merkmal kann die Erfindung in Kraftfahrzeugen genutzt werden, deren Geschwindigkeit durch einen Fahrer gesteuert wird. Das Fahrpedal wird üblicherweise auch als Gaspedal bezeichnet.

Bevorzugte Ausführungsformen sehen vor, dass der Wirkungsgrad ein energetischer Wirkungsgrad oder ein Verschleißwirkungsgrad oder eine Kombination aus beiden Wirkungsgraden ist. Durch Berücksichtigung eines solchen Wirkungsgrads wird eine Wirtschaftlichkeit einer Nutzung des Fahrzeugs erhöht.

Das Verfahren umfasst nach dem Schritt des Erzeugens einer ersten und einer zweiten umverteilten Achsmoment-Vorgabe auch mindestens einen der beiden folgenden Schritte: Begrenzen der ersten umverteilten Achsmoment-Vorgabe; Begrenzen der zweiten umverteilten Achsmoment-Vorgabe. Hierdurch kann eine Überlastung der ersten und/oder der zweiten Achse vermieden werden.

Die vorliegende Erfindung wird nun anhand der beigefügten Zeichnungen näher erläutert, die jeweils ein Beispiel darstellen. Dabei zeigt:
- Fig. 1: schematisch ein Fahrzeug mit einer Vorderachse, die von einem Verbrennungsmotor angetrieben wird, und mit einer Hinterachse, die von einem Elektromotor angetrieben wird;
- Fig. 2: schematisch ein Blockdiagramm einer Fahrzeugsteuerung zum Erzeugen und Verteilen einer Gesamtsollmoment-Vorgabe für ein Fahrzeug;
- Fig. 3: eine Übersicht über mögliche Paarungen von Momenten an beiden Fahrzeugachsen; und
- Fig. 4: schematisch einen Ablauf eines Verfahrens zum Verteilen einer Gesamtsollmoment-Vorgabe für ein Fahrzeug.

Die nachfolgend näher beschriebenen Ausführungsbeispiele stellen bevorzugte Ausführungsformen der vorliegenden Erfindung dar.

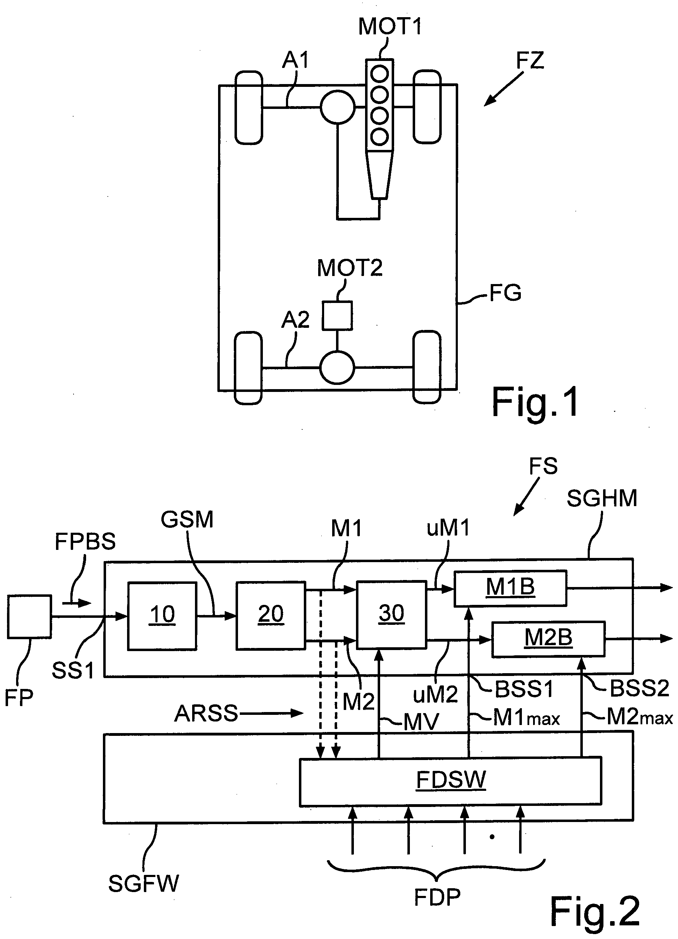

Das in Fig. 1 gezeigte Fahrzeug FZ umfasst eine erste A1 und eine zweite A2 Achse und zwei Antriebe MOT1, MOT2. Die beiden Achsen A1, A2 sind in einem gemeinsamen Fahrgestell FG aufgehängt. Zum Antrieb der ersten Achse A1 ist beispielsweise ein Verbrennungsmotor MOT1 vorgesehen. Zum Antrieb der zweiten Achse A2 ist beispielsweise ein Elektromotor MOT2 vorgesehen. Ein solcher Antrieb kann als 'Hybridantrieb' bezeichnet werden. Zwischen der Antriebswelle der ersten Achse A1 und der zweiten Achse A2 ist keine mechanische Kopplung, insbesondere keine (zentrale) Kardanwelle und kein (zentrales) Differentialgetriebe, vorgesehen. Oder es ist zumindest ein Betrieb des Fahrzeugs FZ mit entkuppelter zentraler Kardanwelle möglich.

Die in Fig. 2 gezeigte Fahrzeugsteuerung umfasst ein Hybridmanager-Steuergerät SGHM, ein Fahrwerksteuergerät SGFW und eine Allrad-Schnittstelle ARSS zwischen dem Fahrwerksteuergerät SGFW und dem Hybridmanager-Steuergerät SGHM. Das Hybridmanager-Steuergerät SGHM umfasst eine Gesamtsollmoment-Vorgabe-Ermittlungsvorrichtung 10, eine Gesamtsollmoment-Aufteilvorrichtung 20, eine Umverteilungsvorrichtung 30, einen ersten Achsmomentbegrenzer M1B und einen zweiten Achsmomentbegrenzer M2B. Steuerungsfunktionen im Fahrwerksteuergerät SGFW sind typischerweise mittels einer Fahrdynamik-Software (Allrad-Fahrdynamik-Software) FDSW verwirklicht. Das Hybridmanager-Steuergerät SGHM und das Fahrwerksteuergerät SGFW können zu einem gemeinsamen Steuergerät zusammengefasst sein.

Die Gesamtsollmoment-Vorgabe-Ermittlungsvorrichtung 10 ermittelt aus einem Betätigungssignal eines Fahrpedals FP eine Gesamtsollmoment-Vorgabe GSM. Das Betätigungssignal FPBS des Fahrpedals FP kann dem Hybridmanager-Steuergerät SGHM über eine erste Schnittstelle SS1 zugeführt werden. Zwischen der Gesamtsollmoment-Vorgabe-Ermittlungsvorrichtung 10 und der Gesamtsollmoment-Aufteilvorrichtung 20 besteht eine Schnittstelle zur Übergabe der Gesamtsollmoment-Vorgabe GSM an die Gesamtsollmoment-Aufteilvorrichtung 20.

Die Gesamtsollmoment-Aufteilvorrichtung 20 hat einen Ausgang zur Ausgabe einer ersten Achsmoment-Vorgabe M1 und einen Ausgang zur Ausgabe einer zweiten Achsmoment-Vorgabe M2. Die beiden Ausgänge sind an je einen Eingang einer der Umverteilungsvorrichtung 30 angeschlossen.

Die Umverteilungsvorrichtung 30 hat einen Ausgang zur Ausgabe einer ersten umverteilten Achsmoment-Vorgabe uM1 und einen Ausgang zur Ausgabe einer zweiten umverteilten Achsmoment-Vorgabe uM2.

Der Ausgang zur Ausgabe der ersten umverteilten Achsmoment-Vorgabe uM1 ist an einen Eingang des ersten Achsmomentbegrenzers M1B angeschlossen. Der Ausgang zur Ausgabe der zweiten umverteilten Achsmoment-Vorgabe uM2 ist an einen Eingang des zweiten Achsmomentbegrenzers M2B angeschlossen.

Ein Ausgang des ersten Achsmomentbegrenzers M1 B ist mit einem Eingang eines (in der Figur nicht dargestellten) ersten Stellglieds zur Einstellung eines Moments an der ersten Achse A1 (beispielsweise an der Vorderachse) verbunden. Ein Ausgang des zweiten Achsmomentbegrenzers M2B ist mit einem Eingang eines (in der Figur nicht dargestellten) zweiten Stellglieds zur Einstellung eines Moments an der zweiten Achse A2 (beispielsweise an der Hinterachse) verbunden. Die beiden Stellglieder sind typischerweise Motorsteuergeräte. Die Motorsteuergeräte können mit dem Hybridmanager-Steuergerät SGHM zu einem gemeinsamen Gerät zusammengefasst sein.

Das Fahrwerksteuergerät SGFW kann über die Allrad-Schnittstelle ARSS zu dem Hybridmanager-Steuergerät SGHM folgende Betriebsparameter vorgeben, welche das Verteilen einer Gesamtsollmoment-Vorgabe GSM im Hybridmanager-Steuergerät SGHM beeinflussen können:
- Das Fahrwerksteuergerät SGFW kann unter Berücksichtigung des aktuellen fahrdynamischen Zustands des Fahrzeugs FZ mittels einer Momentverteilungs-Sollvorgabe MV vorgeben, wie groß ein prozentualer Anteil MV = uM2/(uM1+uM2) der Gesamtsollmoment-Vorgabe GSM sein soll, der der zweiten Achse A2 (beispielsweise Hinterachse) des Fahrzeugs FZ zugeordnet werden soll.
- Außerdem kann das Fahrwerksteuergerät SGFW unter Berücksichtigung des aktuellen fahrdynamischen Zustands des Fahrzeugs FZ eine Obergrenze M1max für das Moment an der ersten Achse A1 (beispielsweise Vorderachse) des Fahrzeugs FZ vorgeben. Optional kann (beispielsweise für einen Brems- oder Rekuperationsbetrieb) Entsprechendes auch für eine Untergrenze eines Moments mit negativem Vorzeichen an der ersten Achse A1 des Fahrzeugs FZ vorgesehen sein.
- Darüber hinaus kann das Fahrwerksteuergerät SGFW unter Berücksichtigung des aktuellen fahrdynamischen Zustands des Fahrzeugs FZ eine Obergrenze M2max für das Moment an der zweiten Achse A2 (beispielsweise Hinterachse) des Fahrzeugs FZ vorgeben. Optional kann (beispielsweise für einen Brems- oder Rekuperationsbetrieb) Entsprechendes auch für eine Untergrenze eines Moments mit negativem Vorzeichen an der zweiten Achse A2 des Fahrzeugs FZ vorgesehen sein.

Optional kann die Allrad-Schnittstelle ARSS auch eine Übergabe der ersten M1 und/oder der zweiten M2 Achsmoment-Vorgabe an das Fahrwerksteuergerät SGFW vorsehen. Das Fahrwerksteuergerät SGFW kann dann eine beliebige (echte oder unechte) Teilmenge der vorgenannten drei Betriebsparameter unter Berücksichtigung der ersten M1 und/oder der zweiten M2 Achsmoment-Vorgabe ermitteln.

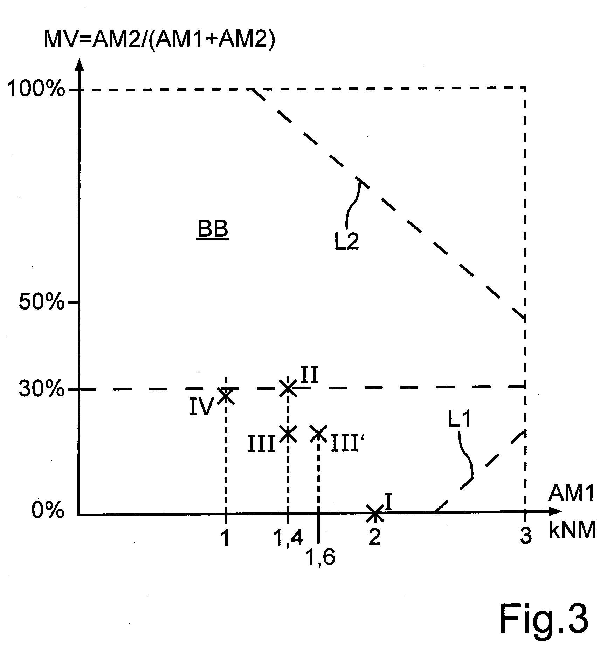

Die Fig. 3 gibt eine Übersicht über eine Variabilität der Antriebsmomentenverteilung eines Allradantriebs. Der Abszissenwert stellt hier das Antriebsmoment AM1 dar, das an der ersten Achse A1 anliegt. Der Ordinatenwert beschreibt den prozentualen Anteil AM2/(AM1 + AM2) des Moments AM2 an der zweiten Achse A2 im Verhältnis zu der Summe AM1 + AM2 der Momente AM1, AM2 an den beiden Achsen A1, A2. Die Linie L1 markiert eine Begrenzung des Betriebsbereichs BB aufgrund einer begrenzten Leistungsfähigkeit der ersten Achse A1. Die Linie L2 markiert eine Begrenzung des Betriebsbereichs BB aufgrund einer begrenzten Leistungsfähigkeit der zweiten Achse A2.

Im Folgenden werden Beispiele für fahrdynamische Betriebszustände I, II, III, IV betrachtet. Für jedes Beispiel wird unterstellt, dass die Gesamtsollmoment-Aufteilvorrichtung 20 eine Gesamtsollmoment-Vorgabe GSM von beispielsweise 2000 Nm vollständig der ersten Achse A1 (beispielsweise Vorderachse) zuordnet.

In dem ersten fahrdynamischen Betriebszustand I kommt eine Überwachungsfunktion im Fahrwerksteuergerät SGFW zu dem Ergebnis, dass der Fahrzustand des Fahrzeugs FZ keinen fahrdynamischen Eingriff für zweckmäßig erscheinen lässt. Es veranlasst daher kein Umverteilen der bereits aufgeteilten Gesamtsollmoment-Vorgabe GSM. Die vollständige Zuordnung der Gesamtsollmoment-Vorgabe GSM von 2000 Nm auf die erste Achse A1 bleibt damit unverändert. In dem ersten fahrdynamischen Betriebszustand kommt die Überwachungsfunktion im Fahrwerksteuergerät SGFW zu dem Ergebnis, dass der Fahrzustand des Fahrzeugs FZ aus fahrdynamischer Sicht auch keine Begrenzung eines der Achsmomente für zweckmäßig erscheinen lässt.

Um zu erreichen, dass die Umverteilungsvorrichtung 30 kein Umverteilen 130 der ersten M1 und zweiten M2 Achsmoment-Vorgabe durchführt, kann vorgesehen sein, dass das Fahrwerksteuergerät SGFW in diesem Fall eine Sollverteilung MV von 0 % anfordert. Um den Fall des Nichtanforderns eines Umverteilens 130 von dem Anfordern einer vollständigen Vermeidung eines Moments auf der zweiten Achse A2 unterscheiden zu können, kann für das Nichtanfordern eines Umverteilens 130 ein besonderes Signal reserviert sein (im Sinne eines Datenwerts, der in der Datenverarbeitung beispielsweise mit NULL, NIL oder mit VOID bezeichnet wird).

In dem zweiten fahrdynamischen Betriebszustand II kommt eine Überwachungsfunktion im Fahrwerksteuergerät SGFW zu dem Ergebnis, dass der Fahrzustand des Fahrzeugs FZ einen fahrdynamischen Eingriff für zweckmäßig erscheinen lässt. Es veranlasst daher ein Umverteilen 130 der bereits aufgeteilten Gesamtsollmoment-Vorgabe GSM, so dass die Aufteilung der Gesamtsollmoment-Vorgabe GSM, die von der Gesamtsollmoment-Aufteilvorrichtung 20 vorgenommen wurde, durch die Umverteilungsvorrichtung 30 überschrieben wird und der zweiten Achse 30% des Moments der Gesamtsollmoment-Vorgabe GSM zugeordnet werden. Von den insgesamt 2000 Nm werden damit der ersten Achse 1400 Nm und der zweiten Achse 600 Nm zugeordnet. In dem zweiten fahrdynamischen Betriebszustand kommt die Überwachungsfunktion im Fahrwerksteuergerät SGFW zu dem Ergebnis, dass der Fahrzustand des Fahrzeugs FZ aus fahrdynamischer Sicht keine Begrenzung eines der Achsmomente für zweckmäßig erscheinen lässt.

In dem dritten fahrdynamischen Betriebszustand III kommt eine Überwachungsfunktion im Fahrwerksteuergerät SGFW zu dem Ergebnis, dass der Fahrzustand des Fahrzeugs FZ einen fahrdynamischen Eingriff für zweckmäßig erscheinen lässt. Es veranlasst daher ein Umverteilen 130 der bereits aufgeteilten Gesamtsollmoment-Vorgabe GSM, so dass die Aufteilung der Gesamtsollmoment-Vorgabe GSM, die von der Gesamtsollmoment-Aufteilvorrichtung 20 vorgenommen wurde, durch die Umverteilungsvorrichtung 30 überschrieben wird und der zweiten Achse 30% des Moments der Gesamtsollmoment-Vorgabe GSM zugeordnet werden. Von den insgesamt 2000 Nm werden damit der ersten Achse 1400 Nm und der zweiten Achse 600 Nm zugeordnet. In dem dritten fahrdynamischen Betriebszustand kommt die Überwachungsfunktion im Fahrwerksteuergerät SGFW zu dem Ergebnis, dass der Fahrzustand des Fahrzeugs FZ aus fahrdynamischer Sicht eine Begrenzung des Achsmoments der zweiten Achse A2 (jedoch nicht der ersten Achse) für zweckmäßig erscheinen lässt. Das Achsmoment an der zweiten Achse A2 wird daher beispielsweise auf 400 Nm begrenzt (siehe Betriebspunkt, der in Fig. 3 mit III bezeichnet ist).

Optional kann vorgesehen sein, dass die durch die Begrenzung des Achsmoments entstehende Differenz (von hier 200 Nm) auf die erste Achse A1 zurückverteilt wird, und zwar soweit, wie eine Begrenzung des Achsmoments der ersten Achse A1 dies zulässt (siehe Betriebspunkt, der in Fig. 3 mit III' bezeichnet ist).

In dem vierten fahrdynamischen Betriebszustand IV kommt eine Überwachungsfunktion im Fahrwerksteuergerät SGFW zu dem Ergebnis, dass der Fahrzustand des Fahrzeugs FZ einen fahrdynamischen Eingriff für zweckmäßig erscheinen lässt. Es veranlasst daher ein Umverteilen 130 der bereits aufgeteilten Gesamtsollmoment-Vorgabe GSM, so dass die Aufteilung der Gesamtsollmoment-Vorgabe GSM, die von der Gesamtsollmoment-Aufteilvorrichtung 20 vorgenommen wurde, durch die Umverteilungsvorrichtung 30 überschrieben wird und der zweiten Achse 30% des Moments der Gesamtsollmoment-Vorgabe GSM zugeordnet werden. Von den insgesamt 2000 Nm werden damit der ersten Achse 1400 Nm und der zweiten Achse 600 Nm zugeordnet. In dem vierten fahrdynamischen Betriebszustand IV kommt die Überwachungsfunktion im Fahrwerksteuergerät SGFW zu dem Ergebnis, dass der Fahrzustand des Fahrzeugs FZ aus fahrdynamischer Sicht eine Begrenzung des Achsmoments beider Achsen A1, A2 für zweckmäßig erscheinen lässt. Das Achsmoment an der ersten Achse A1, A2 wird daher beispielsweise auf 1000 Nm und an der zweiten Achse A2 beispielsweise auf 400 Nm begrenzt. Die durch die Begrenzung des Achsmoments entstehende Differenz für die zweite Achse A2 kann hier nicht auf die erste Achse A1 zurückverteilt werden, da die aktuelle Begrenzung des Achsmoments der ersten Achse A1 dies nicht zulässt (siehe Betriebspunkt, der in Fig. 3 mit IV bezeichnet ist).

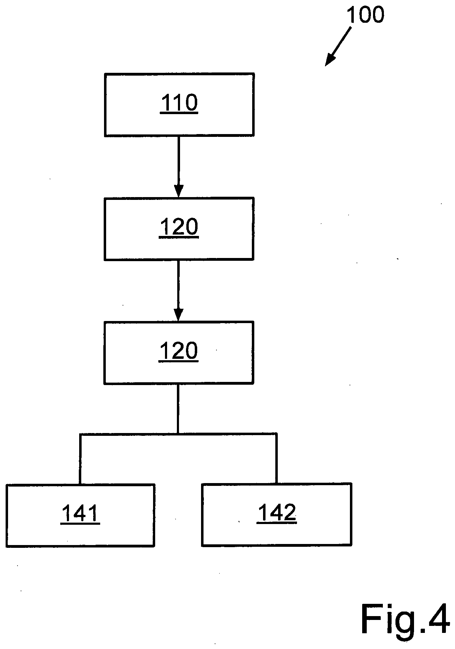

Die Fig. 4 zeigt einen Ablauf eines Verfahrens 100 zum Verteilen einer Gesamtsollmoment-Vorgabe GSM für ein Fahrzeug FZ, wobei das Verfahren 100 folgende Schritte umfasst. In einem ersten Schritt 110 erzeugt eine Gesamtsollmoment-Vorgabe-Ermittlungsvorrichtung 10 eine Gesamtsollmoment-Vorgabe GSM unter Berücksichtigung einer Fahrpedalbetätigung FPB. In einem zweiten Schritt 120 wird ein Wirkungsgrad mittels Aufteilens 120 einer Gesamtsollmoment-Vorgabe GSM in eine erste Achsmoment-Vorgabe M1 für eine erste Achse A1 des Fahrzeugs FZ und in eine zweite Achsmoment-Vorgabe M2 für eine zweite Achse A2 des Fahrzeugs FZ optimiert. In einem dritten Schritt 130 wird eine erste uM1 und eine zweite uM2 umverteilte Achsmoment-Vorgabe mittels teilweisen oder vollständigen Umverteilens 130 der ersten M1 oder der zweiten M2 Achsmoment-Vorgabe auf die andere der beiden Achsmoment-Vorgaben erzeugt. Dies erfolgt unter Berücksichtigung von mindestens einem fahrdynamischen Parameter FDP. In einem vierten Schritt 141, 142 wird die erste umverteilte Achsmoment-Vorgabe uM1 begrenzt und/oder es wird die zweite umverteilte Achsmoment-Vorgabe uM2 begrenzt.

Ausführungsformen der vorliegenden Erfindung können folgende Merkmale aufweisen.

Die Allrad-Schnittstelle ARSS sieht zunächst eine prozentuale Zuweisung der Gesamtsollmoment-Vorgabe GSM zu den beiden Achsen A1, A2 und nachfolgende Begrenzung der einzelnen Achsmomente AM1, AM2 vor. Hierzu wird in dem Hybridmanager-Steuergerät eine aus Effizienzgesichtspunkten gewünschte Antriebsmomentenverteilung berechnet. Die ermittelten beiden Sollmomente für die zwei Antriebsachsen A1, A2 werden der Fahrwerksteuerung SGFW (Fahrdynamikregelung) mitgeteilt.

Die Verteilungsregelung kann auf eine Gesamtsollmoment-Vorgabe GSM erfolgen, die aus Komfortgründen gefiltert wird. Die verteilten M1, M2 und/oder umverteilten uM1, uM2 Moment-Vorgaben können über eine Fahrverhaltensfilterung geführt werden, um einen zu schnellen Momentenaufbau zu vermeiden, der zu Triebstrangschwingungen führen kann. Dadurch kann der Fahrkomfort erheblich gesteigert werden.

Die Antriebsregelung kann aus einem Fahrerwunschmoment GSM eine aus Sicht der Betriebsstrategie optimale Aufteilung der Gesamtsollmoment-Vorgabe GSM auf beide Antriebsachsen A1, A2 ermitteln. Die Aufteilung A1, A2 der Gesamtsollmoment-Vorgabe GSM kann der Fahrwerksteuerung SGFW des Antriebsstrangs über die Allrad-Schnittstelle ARSS mitgeteilt werden.

Soll kein fahrdynamischer Eingriff erfolgen, kann ein Prozentwert für das gewünschte Antriebsmoment AM2 an der zweiten Achse A2 an das Motorsteuergerät zurückgegeben werden, der einer Sollmoment-Vorgabe M1 für die erste Achse A1 entspricht. Ist kein Eingriff von Seiten der Fahrstabilität oder Fahrsicherheit erforderlich, so braucht die prozentuale Verteilung MV = M2/(M1 + M2) der Sollmomente M1, M2 nicht verändert werden.

Soll ein fahrdynamischer Eingriff erfolgen, kann eine prozentuale Verschiebung zugunsten einer der beiden Antriebsachsen A1, A2 erfolgen. Beispielsweise kann der Prozentwert MV für den Anteil des Antriebsmoments AM2 an der zweiten Achse A2 so gewählt werden, dass sich eine gewünschte Verteilung AM2/(AM1+AM2) der Antriebsmomente AM1, AM2 einstellt. Dazu kann der prozentuale Sollanteil MV der primären A1 oder der sekundären A2 Antriebsachse dem Hybridmanager-Steuergerät SGHM mitgeteilt werden.

Kann das Hybridmanager-Steuergerät SGHM den Verteilungswunsch nicht umsetzen, wenn eine der Antriebsachsen A1, A2 das gewünschte Antriebsmoment uM1, uM2 nicht bereitstellen kann, wird eine Verteilung AM2/(AM1+AM2) der Antriebsmomente uM1, uM2 eingestellt, die die zu leistungsschwache Achse A1, A2 an ihrer Leistungsgrenze betreibt. Abhängig von der Leistungsfähigkeit ergibt sich nun eine Antriebsmomentenverteilung AM2/(AM1+AM2), welche fahrdynamische Belange bestmöglich berücksichtigt, ohne das Antriebsmoment der anderen Achse unnötig zu verringern.

Sollte dies nicht ausreichen, kann das Achsmoment für diejenige Antriebsachse, von welcher das Antriebsmoment wegverlagert wird, über die Achsmoment-Begrenzungsschnittstellen BSS1, BSS2 weiter verringert werden, um ein gewünschtes Fahrverhalten einzustellen.

Die Momentenbegrenzung 141, 142 kann auf zeitnahen ungefilterten Istmomenten erfolgen. Die Einrechnung der Begrenzung kann ohne Fahrverhaltensfilterung erfolgen, um eine schnelle Regelung zu gewährleisten und um bei auftretendem Radschlupf dem Radschlupf schnell entgegenwirken zu können.

Eine schnelle Schlupfbegrenzung und/oder Berücksichtigung der Leistungsbegrenzung einer Antriebsachse A1, A2 erfolgt nach einer Lastschlagdämpfung. Dies gewährleistet eine Regelung mit der erforderlichen Geschwindigkeit.

Die Momentaufteilung 120 und/oder die Moment-Umverteilung 130 kann nach einer Gesamtlastschlagdämpfung und vor einer achsselektiven Lastschlagdämpfung erfolgen. Die achsselektiven Lastschlagdämpfer können abgeglichen werden, damit die Filterungen nicht zu einer Rückwirkung auf das Gesamtmoment AM1 + AM2 führen.

## Patentansprüche

1. Hybridmanager-Steuergerät (SGHM) für einen Antriebsstrang eines Fahrzeugs (FZ), wobei das Hybridmanager-Steuergerät (SGHM) eine Gesamtsollmoment-Aufteilvorrichtung (20) zum Optimieren eines Wirkungsgrads mittels Aufteilens (120) einer Gesamtsollmoment-Vorgabe (GSM) in eine erste Achsmoment-Vorgabe (M1) für eine erste Achse (A1) des Fahrzeugs (FZ) und in eine zweite Achsmoment-Vorgabe (M2) für eine zweite Achse (A2) des Fahrzeugs (FZ) aufweist; wobei das Hybridmanager-Steuergerät (SGHM) eine Umverteilungsvorrichtung (30) zum Erzeugen (130) einer ersten (uM1) und einer zweiten (uM2) umverteilten Achsmoment-Vorgabe mittels teilweisen oder vollständigen Umverteilens der ersten (M1) oder der zweiten (M2) Achsmoment-Vorgabe auf die zweite umverteilte Achsmoment-Vorgabe (uM2) oder auf die erste umverteilte Achsmoment-Vorgabe (uM1) unter Berücksichtigung von mindestens einem fahrdynamischen Parameter (FDP) aufweist;
**dadurch gekennzeichnet, dass**
das Hybridmanager-Steuergerät (SGHM) einen ersten Achsmomentbegrenzer (M1B) zum Begrenzen (141) der ersten umverteilten Achsmoment-Vorgabe (uM1) nach dem Erzeugen (130) der ersten umverteilten Achsmoment-Vorgabe (uM1) aufweist, und/oder dass das Hybridmanager-Steuergerät (SGHM) einen zweiten Achsmomentbegrenzer (M2B) zum Begrenzen (141) der zweiten umverteilten Achsmoment-Vorgabe (uM2) nach dem Erzeugen (130) der zweiten umverteilten Achsmoment-Vorgabe (uM2) aufweist.

2. Hybridmanager-Steuergerät (SGHM) nach Anspruch 1, **dadurch gekennzeichnet, dass** das Hybridmanager-Steuergerät (SGHM) eine Vorrichtung zum Ausgleichen einer Verringerung der ersten umverteilten Achsmoment-Vorgabe (uM1) aufweist, die durch das Begrenzen (141) der ersten umverteilten Achsmoment-Vorgabe (uM1) stattfindet, und/oder dass das Hybridmanager-Steuergerät (SGHM) eine Vorrichtung zum Ausgleichen einer Verringerung der zweiten umverteilten Achsmoment-Vorgabe (uM2) aufweist, die durch das Begrenzen (142) der zweiten umverteilten Achsmoment-Vorgabe (uM2) stattfindet.

3. Hybridmanager-Steuergerät (SGHM) nach Anspruch 1 oder 2, **dadurch gekennzeichnet, dass** das Hybridmanager-Steuergerät (SGHM) eine Gesamtsollmoment-Vorgabe-Ermittlungsvorrichtung (10) zum Ermitteln (110) einer Gesamtsollmoment-Vorgabe (GSM) aufweist.

4. Hybridmanager-Steuergerät (SGHM) nach Anspruch 3, **dadurch gekennzeichnet, dass** die Gesamtsollmoment-Vorgabe-Ermittlungsvorrichtung (10) dazu vorbereitet ist, die Gesamtsollmoment-Vorgabe (GSM) unter Berücksichtigung einer Fahrpedalbetätigung (FPB) zu erzeugen.

5. Hybridmanager-Steuergerät (SGHM) nach einem der Ansprüche 1 bis 4, **dadurch gekennzeichnet, dass** der Wirkungsgrad ein energetischer Wirkungsgrad oder ein Verschleißwirkungsgrad oder eine Kombination aus beiden Wirkungsgraden ist.

6. Fahrzeugsteuerung (FS),
**dadurch gekennzeichnet, dass**
die Fahrzeugsteuerung (FS) ein Hybridmanager-Steuergerät (SGHM) nach einem der Ansprüche 1 bis 5 und ein Fahrwerksteuergerät (SGFW) zur Bereitstellung einer Momentverteilungs-Sollvorgabe (MV) und/oder zur Bereitstellung einer Vorgabe (M1 max) für ein maximales Achsmoment der ersten Achse (A1) und/oder zur Bereitstellung einer Vorgabe (M2max) für ein maximales Achsmoment der zweiten Achse (A2) umfasst.

7. Fahrzeug (FZ),
**dadurch gekennzeichnet, dass**
das Fahrzeug (FZ) ein Hybridmanager-Steuergerät (SGHM) nach einem der Ansprüche 1 bis 5 oder eine Fahrzeugsteuerung (FS) nach Anspruch 6 umfasst.

8. Verfahren (100) zum Verteilen einer Gesamtsollmoment-Vorgabe (GSM) für ein Fahrzeug (FZ), wobei das Verfahren (100) folgende Schritte umfasst:
- Optimieren eines Wirkungsgrads mittels Aufteilens (120) einer Gesamtsollmoment-Vorgabe (GSM) in eine erste Achsmoment-Vorgabe (M1) für eine erste Achse (A1) des Fahrzeugs (FZ) und in eine zweite Achsmoment-Vorgabe (M2) für eine zweite Achse (A2) des Fahrzeugs (FZ); und
- Erzeugen (130) einer ersten (uM1) und einer zweiten (uM2) umverteilten Achsmoment-Vorgabe mittels teilweisen oder vollständigen Umverteilens der ersten (M1) oder der zweiten (M2) Achsmoment-Vorgabe auf die andere der beiden Achsmoment-Vorgaben (M1, M2) unter Berücksichtigung von mindestens einem fahrdynamischen Parameter (FDP)
**dadurch gekennzeichnet, dass**
das Verfahren (100) nach dem Schritt des Erzeugens (130) einer ersten (uM1) und einer zweiten (uM2) umverteilten Achsmoment-Vorgabe auch mindestens einen der beiden folgenden Schritte umfasst:
- Begrenzen (141) der ersten umverteilten Achsmoment-Vorgabe (uM1);
- Begrenzen (142) der zweiten umverteilten Achsmoment-Vorgabe (uM2).

## Claims

1. Hybrid manager control unit (SGHM) for a drive train of a vehicle (FZ), wherein the hybrid manager control unit (SGHM) has an overall setpoint torque splitting device (20) for optimizing an efficiency by splitting (120) of an overall setpoint torque specification (GSM) into a first axle torque specification (M1) for a first axle (A1) of the vehicle (FZ) and into a second axle torque specification (M2) for a second axle (A2) of the vehicle (FZ);
wherein the hybrid manager control unit (SGHM) comprises a redistributing device (30) for production (130) of a first (uM1) and a second (uM2) redistributed axle torque specification by partial or full redistribution of the first (M1) or the second (M2) axle torque specification to the second redistributed axle torque specification (uM2) or to the first redistributed axle torque specification (uM1) while taking at least one driving dynamics parameter (FDP) into account;
**characterised in that**
the hybrid manager control unit (SGHM) comprises a first axle torque limiter (M1B) for limitation (141) of the first redistributed axle torque specification (uM1) after production (130) of the first redistributed axle torque specification (uM1), and/or **in that** the hybrid manager control unit (SGHM) comprises second first axle torque limiter (M2B) for limitation (141) of the second redistributed axle torque specification (uM2) after production (130) of the second redistributed axle torque specification (uM2).

2. Hybrid manager control unit (SGHM) according to claim 1, **characterised in that** the hybrid manager control unit (SGHM) comprises a device for compensating for a reduction of the first redistributed axle torque specification (uM1), which takes place because of the limitation (141) of the first redistributed axle torque specification (uM1), and/or **in that** the hybrid manager control unit (SGHM) comprises a device for compensating for a reduction of the second redistributed axle torque specification (uM2), which takes place because of the limitation (142) of the first redistributed axle torque specification (uM2).

3. Hybrid manager control unit (SGHM) according to claim 1 or 2, **characterised in that** the hybrid manager control unit (SGHM) comprises an overall setpoint torque specification determination device (10) for determination (110) of an overall setpoint torque specification (GSM).

4. Hybrid manager control unit (SGHM) according to claim 3, **characterised in that** the overall setpoint torque specification determination device (10) is configured in order to produce the overall setpoint torque specification (GSM) while taking an accelerator pedal actuation (FPB) into account.

5. Hybrid manager control unit (SGHM) according to any one of claims 1 to 4, **characterised in that** the efficiency is an energy efficiency or a wear efficiency, or a combination of the two efficiencies.

6. Vehicle controller (FS)
**characterised in that**
the vehicle controller (FS) comprises a hybrid manager control unit (SGHM) according to any one of claims 1 to 5 and a chassis control unit (SGFW) for providing an instantaneous distribution setpoint specification (MV), and/or for providing a specification (M1max) for a maximum axle torque of the first axle (A1), and/or for providing a specification (M2max) for a maximum axle torque of the second axle (A2).

7. Vehicle (FZ),
**characterised in that**
the vehicle (FZ) comprises a hybrid manager control unit (SGHM) according to any one of claims 1 to 5 or a vehicle controller (FS) according to claim 6.

8. Method (100) for distributing an overall setpoint torque specification (GSM) for a vehicle (FZ), wherein the method (100) comprises the following steps:
- optimisation of an efficiency by splitting (120) of an overall setpoint torque specification (GSM) into a first axle torque specification (M1) for a first axle (A1) of the vehicle (FZ) and into a second axle torque specification (M2) for a second axle (A2) of the vehicle (FZ); and
- production (130) of a first (uM1) and a second (uM2) redistributed axle torque specification by partial or full redistribution of the first (M1) or the second (M2) axle torque specification to the other of the two axle torque specifications (M1, M2) while taking at least one driving dynamics parameter (FDP) into account,
**characterised in that**,
after the step of production (130) of a first (uM1) and a second (uM2) redistributed axle torque specification, the method (100) also comprises at least one of the following two steps:
- limitation (141) of the first redistributed axle torque specification (uM1);
- limitation (142) of the second redistributed axle torque specification (uM2).

## Revendications

1. Appareil de commande de gestionnaire hybride (SGHM) pour une chaîne cinématique d'un véhicule (FZ), lequel appareil de commande de gestionnaire hybride (SGHM) comporte un dispositif de division de couple théorique global (20) afin d'optimiser un rendement au moyen d'une division (120) d'une prescription de couple théorique global (GSM) en une première prescription de couple d'essieu (M1) pour un premier essieu (A1) du véhicule (FZ) et en une deuxième prescription de couple d'essieu (M2) pour un deuxième essieu (A2) du véhicule (FZ) ;
l'appareil de commande de gestionnaire hybride (SGHM) comportant un dispositif de redistribution (30) destiné à produire (130) une première prescription de couple d'essieu redistribuée (uM1) et une deuxième prescription de couple d'essieu redistribuée (uM2) au moyen d'une redistribution partielle ou complète de la première prescription de couple d'essieu (M1) ou de la deuxième prescription de couple d'essieu (M2) sur la deuxième prescription de couple d'essieu redistribuée (uM2) ou sur la première prescription de couple d'essieu redistribuée (uM1) en tenant compte d'au moins un paramètre lié à la dynamique de conduite (FDP) ;
**caractérisé en ce que** l'appareil de commande de gestionnaire hybride (SGHM) comporte un premier limiteur de couple d'essieu (M1B) destiné à limiter (141) la première prescription de couple d'essieu redistribuée (uM1) après la production (130) de la première prescription de couple d'essieu redistribuée (uM1) et/ou **en ce que** l'appareil de commande de gestionnaire hybride (SGHM) comporte un deuxième limiteur de couple d'essieu (M2B) destiné à limiter (141) la deuxième prescription de couple d'essieu redistribuée (uM2) après la production (130) de la deuxième prescription de couple d'essieu redistribuée (uM2).

2. Appareil de commande de gestionnaire hybride (SGHM) selon la revendication 1, **caractérisé en ce que** l'appareil de commande de gestionnaire hybride (SGHM) comporte un dispositif destiné à compenser une réduction de la première prescription de couple d'essieu redistribuée (uM1) qui est due à la limitation (141) de la première prescription de couple d'essieu redistribuée (uM1) et/ou **en ce que** l'appareil de commande de gestionnaire hybride (SGHM) comporte un dispositif destiné à compenser une réduction de la deuxième prescription de couple d'essieu redistribuée (uM2) qui est due à la limitation (142) de la deuxième prescription de couple d'essieu redistribuée (uM2).

3. Appareil de commande de gestionnaire hybride (SGHM) selon la revendication 1 ou 2, **caractérisé en ce que** l'appareil de commande de gestionnaire hybride (SGHM) comporte un dispositif de détermination de prescription de couple théorique global (10) destiné à déterminer (110) une prescription de couple théorique global (GSM).

4. Appareil de commande de gestionnaire hybride (SGHM) selon la revendication 3, **caractérisé en ce que** le dispositif de détermination de prescription de couple théorique global (10) est préparé pour produire la prescription de couple théorique global (GSM) en tenant compte d'un actionnement de pédale d'accélération (FPB).

5. Appareil de commande de gestionnaire hybride (SGHM) selon l'une des revendications 1 à 4, **caractérisé en ce que** le rendement est un rendement énergétique ou un rendement d'usure ou une combinaison de ces deux rendements.

6. Commande de véhicule (FS), **caractérisée en ce que** la commande de véhicule (FS) comprend un appareil de commande de gestionnaire hybride (SGHM) selon l'une des revendications 1 à 5 et un appareil de commande de suspension (SGFW) en vue de la mise à disposition d'une prescription théorique de distribution de couple (MV) et/ou de la mise à disposition d'une prescription (M1max) pour un couple d'essieu maximal du premier essieu (A1) et/ou de la mise à disposition d'une prescription (M2max) pour un couple d'essieu maximal du deuxième essieu (A2).

7. Véhicule (FZ), **caractérisé en ce que** le véhicule (FZ) comprend un appareil de commande de gestionnaire hybride (SGHM) selon l'une des revendications 1 à 5 ou une commande de véhicule (FS) selon la revendication 6.

8. Procédé (100) pour distribuer une prescription de couple théorique global (GSM) pour un véhicule (FZ), dans lequel le procédé (100) comprend les étapes suivantes :
- optimisation d'un rendement au moyen d'une division (120) d'une prescription de couple théorique global (GSM) en une première prescription de couple d'essieu (M1) pour un premier essieu (A1) du véhicule (FZ) et en une deuxième prescription de couple d'essieu (M2) pour un deuxième essieu (A2) du véhicule (FZ) ; et
- production (130) d'une première prescription de couple d'essieu redistribuée (uM1) et d'une deuxième prescription de couple d'essieu redistribuée (uM2) au moyen d'une redistribution partielle ou complète de la première prescription de couple d'essieu (M1) ou de la deuxième prescription de couple d'essieu (M2) sur l'autre des deux prescriptions de couple d'essieu redistribuées (M1, M2) en tenant compte d'au moins un paramètre lié à la dynamique de conduite (FDP),
**caractérisé en ce que** le procédé (100) comprend aussi, après l'étape de la production (130) d'une première prescription de couple d'essieu redistribuée (uM1) et d'une deuxième prescription de couple d'essieu redistribuée (uM2), au moins l'une des deux étapes suivantes :
- limitation (141) de la première prescription de couple d'essieu redistribuée (uM1);
- limitation (142) de la deuxième prescription de couple d'essieu redistribuée (uM2).
